Europäisches Patentamt

European Patent Office

Office européen des brevets

(19)

(11) Publication number: **0 109 464**
**B1**

(12)　　　　　　　　**EUROPEAN PATENT SPECIFICATION**

(45) Date of publication of patent specification: **02.04.86**

(51) Int. Cl.⁴: **B 29 C 71/02**

(21) Application number: **82306214.6**

(22) Date of filing: **22.11.82**

(54) Method of strengthening neck portion of bottle-shaped container of polyethylene terephthalate resin.

(43) Date of publication of application:
**30.05.84 Bulletin 84/22**

(45) Publication of the grant of the patent:
**02.04.86 Bulletin 86/14**

(84) Designated Contracting States:
**CH DE FR GB IT LI NL**

(56) References cited:
**DE-A-2 344 129**
**DE-C- 875 404**

(73) Proprietor: **Yoshino Kogyosho CO., LTD.**
**No 3-2-6, Ojima 3-chome, Koto-ku**
**Tokyo 136 (JP)**

(72) Inventor: **Takada, Takuzo**
**No. 3-2-6, Ojima**
**Koto-Ku Tokyo (JP)**
Inventor: **Iizuka, Takao**
**No. 310, Minoridai**
**Matsudo-shi Chiba-ken (JP)**

(74) Representative: **Heath, Derek James et al**
**Bromhead & Co. 30 Cursitor Street Chancery Lane**
**London EC4A 1LT (GB)**

Courier Press, Leamington Spa, England.

## Description

This invention relates to a method of strengthening the neck portion of a hollow blow-molded bottle-shaped container of a biaxially oriented polyethylene terephthalate resin.

A blow-molded bottle-shaped container of a biaxially oriented polyethylene terephthalate resin, hereinafter referred to as "a PET", has a wide range of applications in a great deal of quantities due to its excellent physical properties and durability. However, some of the excellent physical properties and durability of a bottle-shaped container of PET can be formed effectively after the resin material of the bottle-shaped container has been biaxially oriented.

Therefore, the neck portion of the bottle-shaped container which has been molded without being almost oriented at the time of molding the container has been deteriorated in certain physical properties and durability as compared with the body which has been molded with being sufficiently oriented.

In a representative event, when alcohol of high density is contacted with the neck portion of the bottle-shaped container, the alcohol thus contacted is impregnated into the wall of the neck portion, and a crazing occurs at the impregnated neck portion, causing whitening of the impregnated neck portion.

There has heretofore been a method of increasing the density of the resin material by heat treating the neck portion to allow the neck portion to be crystallized and whitened as means for eliminating the aforementioned drawback of the blow-molded bottle-shaped container of the PET.

This conventional method of increasing the density of the neck portion of the bottle-shaped container of the PET has performed the excellent effect to improve the impact resistance, the wear resistance and the external pressure resistance of the container due to the large increase of the crazing resistance of the neck portion and by improving the mechanical rigidity of the neck portion. However, the neck portion has always been subjected to thermal contraction phenomenon due to the thermal influence of the heat treatment conducted to whiten the resin material of the neck portion, and the neck portion has sometimes been incorrectly deformed due to the thermal contraction.

In other words, the neck portion of the bottle-shaped container of the PET of this type has been provided with a spiral thread or a collar formed on the outer peripheral surface, causing irregular thickness to be produced, the neck portion has not always been uniformly heated in the entirety and has not been as well cooled uniformly simultaneously as a whole. Accordingly, the contraction deformation of the neck portion due to the thermal influence affected to the neck portion has not uniformly occurred, and the circularity of the neck portion has sometimes been lost or the flatness of the top surface of the neck portion has been lost as its drawbacks.

Accordingly, an object of the present invention is to provide a method of strengthening the neck portion of a bottle-shaped container of polyethylene terephthalate resin which can eliminate the aforementioned drawbacks and disadvantages of the conventional method of increasing the density of the neck portion of the bottle-shaped container of the PET and which can prevent the occurrence of the incorrect contraction deformation of the neck portion due to the thermal influence applied externally when the neck portion is heat treated to be whitened and strengthened.

Another object of the present invention is to provide a method of strengthening the neck portion of a bottle-shaped container of polyethylene terephthalate resin which can perform the heat treatment and blow-molding of the neck portion with the same number of steps and molding time as those of a conventional method merely by applying an inserting work of a die pin into the neck portion.

Still another object of the present invention is to provide a method of strengthening the neck portion of a bottle-shaped container of polyethylene resin which can form the neck portion to be contraction deformed with a cross section of regular circularity in accordance with the shape of a die pin to be inserted into the bore of the neck portion and with a flatness on the top surface of the neck portion.

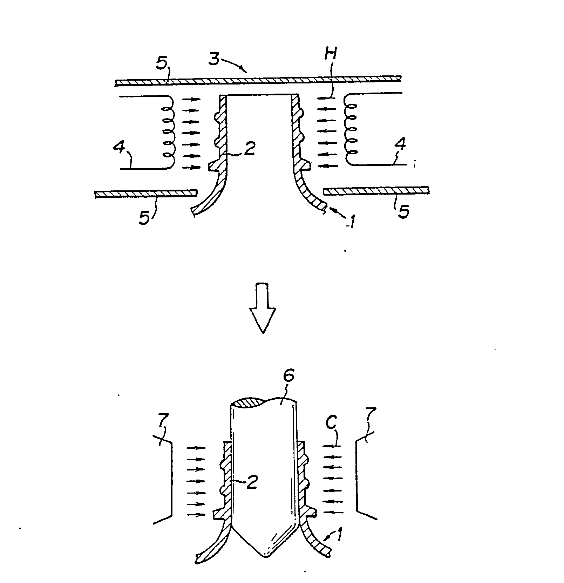

The above and other related objects and features of the invention will be apparent from a reading of the following description of the disclosure found in the accompanying drawing and the novelty thereof pointed out in the appended claims.

Figure is a view showing the steps of the method according to an embodiment of the present invention.

The present invention will now be described in more detail with reference to the accompanying drawing.

In Figure, a method of strengthening the neck portion of a bottle-shaped container of PET according to the present invention comprises the steps of heating, as designated by H, the neck portion 2 of the bottle-shaped container 1 biaxially orientation blow-molded to approx. 140 to 170°C, then inserting a die pin 6 of a cylindrical shape having an outer diameter substantially smaller than the bore of the neck portion 2 and cooling function into the neck portion 2 thus heated, and blowing chilled air from outside to the neck portion 2 to cool, as designated by C, the neck portion 2 and to increase the strengthen the density of the resin material of the neck portion 2.

Heating means for the neck portion 2 may employ a variety of methods, and has, as in the embodiment exemplified in Figure, a heating furnace 3 which contains therein a heater 4 in a frame wall 5 so that only the neck portion 2 of the bottle-shaped container 1 is inserted into the furnace 3, and moves the bottle-shaped container 1 at a predetermined constant speed while rotating around its own axis in the state that the neck portion 2 is disposed in the furnace 3, thereby heating the entire neck portion 2 uniformly at approx. 140 to 170°C.

The heating temperature of the neck portion 2 is determined as a reference to a temperature at which the material of PET is crystallized to be whitened, and is predetermined with respect to the reference temperature in accordance with the thickness of the wall of the neck portion 2 so as to perform the heating of the neck portion 2 to the accurate temperature by regulating the electric power supplied to the heater 4 and the moving speed of the bottle-shaped container 1.

The neck portion 2 thus heated to the preset temperature and removed from the furnace 3 is gradually cooled by the die pin 6 and by blowing chilled air from a blower 7 in the state that the die pin 6 is inserted into the neck portion 2. In this manner, the resin material of the neck portion 2 is crystallized to be whitened and is thus strengthened. The neck portion 2 is thus cooled by the die pin 6 and by the chilled air preferably for approx. 20 to 25 seconds.

The cooling step of the neck portion 2 by the die pin 6 and the chilled air may be gradually cooled with respect to the PET and its cooling speed, but the cooling degree and the cooling speed may not be regarded in this cooling step.

The die pin 6 is formed in a cylindrical shape having an outer diameter substantially smaller than the bore of the neck portion 2 before being heat treated, and has cooling function by means such as means for circulating and supplying cooling fluid therein. The outer diameter of the die pin 6 is set in accordance with the bore of and the thickness of the wall of the neck portion 2 to be thus formed.

More particularly, the neck portion 2 of the bottle-shaped container 1 of the PET is heated, causing substantially thermal contraction, and the outer diameter of the die pin 6 is accordingly set to the value of the degree that the die pin 6 may be tightly inserted into the bore of the neck portion 2 merely heat treated in this manner.

Therefore, the outer diameter of the die pin 6 becomes a value larger than the bore of the neck portion 2 cooled and solidified after being heated without the die pin 6 in the neck portion 2.

As described above, the outer diameter of the die pin 6 is set to a value larger than the bore of the neck portion 2 thus cooled, solidified and contracted in the state without the die pin 6. Accordingly, the neck portion 2 is urged to the die pin 6 by means of the contraction of itself and is thus formed in the final shape.

In this case, the die pin 6 is formed in a cylindrical shape having a section of a regular circle. Accordingly, the neck portion 2 thus contracted and deformed is formed in a cylindrical shape having a section of a regular circle in accordance with the shape of the die pin 6.

When the sectional shape of the neck portion 2 is thus formed in a cylindrical shape having a section of a regular circle, the upper end face of the neck portion 2 should be retained in a flat surface. In this manner, the neck portion 2 is thermally contracted in the state accurately retaining the shape at the injection molding time as it is, and no incorrect distortion is produced due to the thermal contraction at the neck portion 2.

As described above, the neck portion 2 is contracted and formed in the state that the die pin 6 is tightened. Therefore, the tightening of the die pin 6 by the neck portion 2 becomes very strong.

Therefore, it is preferred that the outer surface of the die pin 6 is substantially reduced in the outer diameter in a tapered peripheral surface toward the sharpened tip of the die pin 6 so as to smoothly perform the removal of the die pin 6 or the pulling of the die pin 6 from the bore of the neck portion 2 after the neck portion 2 is thermally contracted and formed.

It should be appreciated from the foregoing description that since the method of strengthening the neck portion of the blow-molded bottle-shaped container of the PET of the present invention has the steps of heat treating the neck portion 2 so as to increase the physical property resistance and the mechanical strength resistance upon enhancement of the density of the resin of the neck portion 2 and forming at that time of heat treating the neck portion 2 the neck portion 2 thus thermally contracted and deformed in accordance with the die pin 6, the neck portion 2 is heat treated without being incorrectly strained and is thus thermally contacted, and thereby effectively preventing the production of the incorrect deformation of the neck portion 2 upon thermal contraction of the neck portion 2, and since the method can additionally have only the step of inserting the die pin 6 into the neck portion 2, the method can perform the heat treating formation of the neck portion 2 with the same number of steps and the same forming time as those of the conventional method.

**Claims**

1. A method of strengthening the neck portion of a bottle-shaped container of polyethylene terephthalate resin comprising the steps of:

(a) heating the neck portion of said biaxially orientation blow-molded bottle-shaped container to substantially 140 to 170°C,

(b) inserting a die pin of a cylindrical shape having an outer diameter substantially smaller than the bore of the neck portion into the neck portion thus heated, and

(c) blowing chilled air from outside to the neck portion to cool the neck portion and to whiten the neck portion.

2. The method of strengthening the neck portion of a bottle-shaped container of polyethylene terephthalate resin according to claim 1, wherein said die pin has a cooling function.

3. The method according to claim 2, wherein said die pin is formed in a cylindrical shape having an outer diameter substantially smaller than the bore of the neck portion before being heat treated.

4. The method according to claim 2, wherein said die pin has means for circulating and supplying cooling fluid therein.

5. The method according to claim 2, wherein said die pin is set at the outer diameter in accordance with the bore of and the thickness of the wall of the neck portion to be thus formed, and is set to a value larger than the bore of the neck portion cooled, solidified and contracted in the state without said die pin.

6. The method according to claim 1, wherein the heating temperature of the neck portion is as a reference a temperature at which the material of polyethylene terephthalate resin is crystallized to be whitened and is predetermined with respect to the reference temperature in accordance with the thickness of the wall of the neck portion so as to perform the heating of the neck portion to the accurate temperature by regulating the electric power supplied to a heater and the moving speed of the bottle-shaped container.

7. The method according to claim 1, wherein the neck portion is cooled by said die pin and by the chilled air for substantially 20 to 25 seconds.

8. The method according to claim 1, wherein said die pin is formed in a cylindrical shape having a section of a regular circle.

9. The method according to claim 1, wherein said die pin is substantially reduced in the outer diameter in a tapered peripheral surface toward the sharpened tip thereof so as to smoothly perform the removal of said die pin or the pulling of said die pin from the bore of the neck portion after the neck portion is thermally contracted and formed.

**Patentansprüche**

1. Verfahren zum Verstärken des Halsteils von flaschenförmigen Behältern aus Polyethylenterephthalatharz, umfassend folgende Stufen:
(a) Erhitzen des Halsteils des biaxial orientierten, blasgeformten, flaschenförmigen Behälters auf im wesentlichen 140 bis 170°C,
(b) Einsetzen eines Formstiftes mit einer zylindrischen Form mit einem Aussendurchmesser, der wesentlich kleiner ist als das Kaliber des Halsteils in dem so erhitzten Halsteil, und
(c) Blasen von gekühlter Luft von aussen auf den Halsteil, um den Halsteil zu kühlen und den Halsteil weiss zu machen.

2. Verfahren zum Verstärken des Halsteils von flaschenförmigen Behältern aus Polyethylenterephthalatharz gemäss Anspruch 1, worin der Formstab eine Kühlfunktion hat.

3. Verfahren gemäss Anspruch 2, worin der Formstab als zylindrische Form mit einem Aussendurchmesser, der wesentlich kleiner als das Kaliber des Halsteils vor der Wärmebehandlung ist, geformt ist.

4. Verfahren gemäss Anspruch 2, worin der Formstab Einrichtungen hat, um Kühlflüssigkeit darin zu zirkulieren und zuzuführen.

5. Verfahren gemäss Anspruch 2, worin der Formstab so eingestellt ist, dass der Aussendurchmesser in Übereinstimmung mit dem Kaliber und der Dicke der Wandung des so zu bildenden Halsteils ist und auf einen grösseren Wert als das Kaliber des ohne den Formstab gekühlten, verfestigten und kontraktierten Halsteils eingestellt ist.

6. Verfahren gemäss Anspruch 1, worin die Heiztemperatur des Halsteils eine Referenztemperatur ist, bei welcher das Material des Polyethylenterephthalatharzes unter Weisswerden kristallisiert und so unter Berücksichtigung der Referenztemperatur in Übereinstimmung mit der Dicke der Wandung des Halsteils vorbestimmt ist, dass das Erhitzen des Halsteils auf die genaue Temperatur erfolgt, indem man die einem Heizer zugeführte elektrische Energie und die Bewegungsgeschwindigkeit des flaschenförmigen Behälters reguliert.

7. Verfahren gemäss Anspruch 1, worin der Halsteil mittels des Formstabs und durch die gekühlte Luft während im wesentlichen 20 bis 25 Sekunden gekühlt wird.

8. Verfahren gemäss Anspruch 1, worin der Formstab mit einer zylindrischen Form mit einem Querschnitt in Form eines regelmässigen Kreises gebildet ist.

9. Verfahren gemäss Anspruch 1, worin der Formstab im wesentlichen in seinem Aussendurchmesser in einer verjüngten, peripheren Oberfläche in Richtung der zugespitzten Spitze davon verjüngt ist, so dass man die Entfernung des Formstabs oder das Herausziehen des Formstabs aus der Bohrung des Halsteils, nachdem der Halsteil thermisch kontaktiert und gebildet wurde, leicht vornehmen kann.

**Revendications**

1. Procédé pour renforcer le col d'un récipient en forme de bouteille en résine téréphtalate de polyéthylène, comprenant les étapes qui consistent:
(a) à chauffer le col dudit récipient en forme de bouteille, moulé par soufflage avec orientation biaxiale, à sensiblement 140 à 170°C,
(b) à insérer une broche poinçon de forme cylindrique, ayant un diamètre extérieur sensiblement plus petit que le trou du col, dans le col ainsi chauffé, et
(c) à souffler de l'air refroidi de l'extérieur vers le col pour refroidir le col et pour blanchir le col.

2. Procédé pour renforcer le col d'un récipient en forme de bouteille en résine téréphtalate de polyéthylène selon la revendication 1, dans lequel ladite broche poinçon assume une fonction de refroidissement.

3. Procédé selon la revendication 2, dans lequel ladite broche poinçon est façonnée à une forme cylindrique ayant un diamètre extérieur sensiblement plus petit que le trou du col avant le traitement thermique.

4. Procédé selon la revendication 2, dans lequel ladite broche poinçon comporte des moyens destinés à faire circuler et à introduire un fluide de refroidissement dans cette broche.

5. Procédé selon la revendication 2, dans lequel le diamètre extérieur de ladite broche poinçon est ajusté en fonction du trou et de l'épaisseur de le paroi du col à façonner ainsi, et est ajusté à une valeur supérieure à celle du trou du col refroidi, solidifié et contracté, en l'absence de ladite broche poinçon.

6. Procédé selon la revendication 1, dans lequel la temperature de chauffage du col est établie en référence à une température à laquelle la matière constituée par la résine téréphtalate de polyéthylène est cristallisée de façon à être blanchie, et est prédéterminée par rapport à la température de référence, en fonction de l'épaisseur de la paroi du col afin que le col soit chauffé à la température précise par réglage de la puissance électrique fournie à un élément chauffant et de la vitesse de déplacement du récipient en forme de bouteille.

7. Procédé selon la revendication 1, dans lequel le col est refroidi par ladite broche poinçon et par l'air refroidi pendant environ 20 à 25 secondes.

8. Procédé selon la revendication 1, dans lequel ladite broche poinçon est façonnée en une forme cylindrique ayant une section en cercle régulier.

9. Procédé selon la revendication 1, dans lequel le diamètre extérieur de ladite broche poinçon est sensiblement réduit afin qu'elle présente une surface périphérique s'effilant vers son extrémité pointue pour que l'enlèvement de ladite broche poinçon ou le retrait de ladite broche poinçon du trou du col, après que le col a été contracté et façonné thermiquement, s'effectue en douceur.